(19) Europäisches Patentamt
European Patent Office
Office européen des brevets

(11) Veröffentlichungsnummer: **0 026 886**
**B1**

(12) **EUROPÄISCHE PATENTSCHRIFT**

(45) Veröffentlichungstag der Patentschrift: **20.06.84**

(21) Anmeldenummer: **80105847.0**

(22) Anmeldetag: **26.09.80**

(51) Int. Cl.³: **C 09 B 67/44,** D 06 P 1/00 // C09B69/04, C09B67/26, C09B67/34

(54) **Konzentrierte Farbstoffpräparationen.**

(30) Priorität: **09.10.79 DE 2940849**

(43) Veröffentlichungstag der Anmeldung:
**15.04.81 Patentblatt 81/15**

(45) Bekanntmachung des Hinweises auf die Patenterteilung:
**20.06.84 Patentblatt 84/25**

(84) Benannte Vertragsstaaten:
**CH DE FR GB IT LI**

(56) Entgegenhaltungen:
**CH - A - 490 469**
**CH - A - 519 622**
**DE - A - 2 143 666**
**DE - A - 2 633 154**
**FR - A - 1 599 407**
**FR - A - 2 285 441**
**US - A - 2 921 830**

(73) Patentinhaber: **BAYER AG, Konzernverwaltung RP Patentabteilung, D-5090 Leverkusen 1 Bayerwerk (DE)**

(72) Erfinder: **Gleinig, Harald, Dr., Eichholzer Weg 100, D-5068 Odenthal (DE)**
Erfinder: **Breig, Kurt, Dr., Leopold-Gmelin-Strasse 80, D-5000 Köln 80 (DE)**
Erfinder: **Reppert, Jürgen, Dr., Hollenberger Strasse 15, D-5250 Engelskirchen (DE)**
Erfinder: **Linhart, Karl, Dr., Heymannstrasse 65, D-5090 Leverkusen 1 (DE)**

EP 0 026 886 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind konzentrierte Präparationen metallfreier, sulfogruppen-haltiger Azo- oder basischer Farbstoffe, welche

5–80 Gew.-% Farbstoff, vorzugsweise 10–50 Gew.-%

95–20 Gew.-%, vorzugsweise 90–50 Gew.-% eines Lösungsmittels der Formel

$$H{-}O{-}CH_2CH_2{-}OR \qquad (I)$$

worin

R = Propyl oder Isopropyl

und gegebenenfalls

0–75 Gew.-% Wasser und/oder mit Wasser und/oder den Lösungsmitteln der Formel I mischbare Lösungsmittel bzw. Lösungsvermittler, vorzugsweise 0–30 Gew.-%

enthalten.

Geeignete mit Wasser und/oder den Lösungsmitteln mischbare Lösungsmittel bzw. Lösungsvermittler sind beispielsweise ein- und mehrwertige Alkohole, deren Ether und Ester, cyclische Ether und Sulfone, Amide und Nitrile wie Ethylenglykol, Propylenglykol, Di- und Triethylenglykol, 2-Methylpentandiol-2,4, Ethylenglykolmonomethyl-, -ethyl- oder butylether, Diethylenglykolmonomethyl-, -ethyl- oder butylether, Diethylenglykolmonoethyletheracetat, Triethylenglykolmonobutylether, Dipropylenglykol, Glycerin, Glycerin-1,3-diethylether, Thiodiglykol, Formamid oder N,N-Dimethylformamid, N,N-Dimethylacetamid, N,N-Dimethylmethoxyacetamid, N,N,N′,N′-Tetramethylharnstoff. Ausserdem kommen als Lösungsmittel Lactame, Lactone oder gegebenenfalls Oxygruppen enthaltende Nitrile, wie N-Methylpyrrolidon, 1,5-Dimethylpyrrolidon, γ-Butyrolacton, Acetonitril oder β-Hydroxypropionitril in Frage, ferner auch andere flüssige Verbindungen, wie Ester, z.B. Ethyllactat, Ethylencarbonat, Diethylenglykolmonoacetat, Ethylketon, Diacetonalkohol oder Acetonylaceton, gegebenenfalls Ethergruppen aufweisende Monoalkohole, wie Isopropylalkohol, 2-Hydroxymethyltetrahydropyran, Tetrahydrofurfurylalkohol, Glycerinformel (5-Oxy-1,3-dioxan), schwefelhaltige Verbindungen, z.B. Sulfolan (Tetramethylensulfon, Tetrahydrothiophen-S-dioxyd) und Sulfolen (2,3- oder 2,5-Dihydrothiophen-S-dioxyd) und deren in α- und/oder β-Stellung insbesondere durch Alkyl- oder Hydroxyalkylgruppen substituierte Derivate, Dimethylsulfoxyd, Phosphorverbindungen, z.B. Hexamethylphosphorsäuretriamid, Bis-(dimethylamido)-methanphosphat, einfache Heterocyclen wie Tetrahydrofuran, Pyridin, Dioxan, Glykolformal (1,3-Dioxolan), ferner auch feste Verbindungen, wie z.B. Caprolactam, Trimethylolethan, oder Tetrahydroxymethylmethan (Pentaerythrit) oder Ester der Hydroxyessigsäure insbesondere die Propylester sowie Ester der Hydroxyessigsäure mit Ethylenglykolmonopropylether. Die Präparationen können weitere übliche Zusatzstoffe enthalten, beispielsweise Dispergiermittel und Emulgatoren.

Als Farbstoffe kommen insbesondere sulfogruppenhaltige Mono-, Bis- und Polyazofarbstoffe in Betracht, beispielsweise solche der Benzol-azo-benzol-, Benzol-azo-naphthalin-, Naphthalinazo-naphthalin-, Benzol-azo-pyrazolon-, Benzol-azo-acetessigamid-, Benzol-azobenzol-azobenzol-, Benzol- azo-naphthalin-azobenzol oder Benzol-azobenzol-azonaphthalin-reihe.

Die sulfogruppenhaltigen Farbstoffe können in Form der freien Säure oder in Form ihrer Salze vorliegen, insbesondere der Ammonium-, Lithium-, Natrium-, Kalium-, Calcium oder Magnesiumsalze oder in Form der Salze mit organischen Basen, insbesondere Mono-, Di- und Trialkanolaminen wie Ethanolamin, Diethanolamin, Triethanolamin, Diisopropanolamin, Triisopropanolamin, Tris-[2-(2-hydroxyethoxy)-ethyl]amin, 2-Amino-2-hydroxymethyl-propandiol-(1,3), N-Methyldiethanolamin und Mischungen aus diesen Basen oder entsprechenden quartären Basen.

Bevorzugt sind Lösungen, die folgende Farbstoffe enthalten:

1. sulfogruppenhaltige Farbstoffe der Formel

$$A{-}N{=}N{-}B{-}N{=}N{-}T{-}N{=}N{-}C{-}N{=}N{-}D,$$

wobei

A, B, C, D gegebenenfalls substituiertes Phenyl(en) oder Naphthyl(en),

T Rest einer Tetrazokomponente

Die Farbstoffe liegen vorzugsweise als Alkali- (insbesondere K-, Na-, Li- und/oder Ammonium-) und/oder Alkanolaminsalze vor. Als Substituenten für A, B, C und D kommen insbesondere in Frage: Hydroxy, Sulfo, Alkyl, Alkoxy, Halogen.

Bevorzugte Farbstoffe (in Form der freien Säure geschrieben) sind solche mit

A, D Rest einer Kupplungskomponente der Hydroxy- oder Aminobenzolreihe

insbesondere 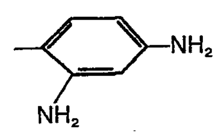

B, C Hydroxy-sulfo-naphthylen, insbesondere

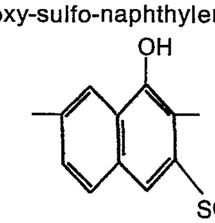

T Rest einer Tetrakomponente, beispielsweise

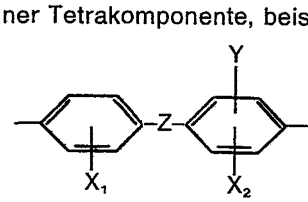

mit

$X_1$ H, Alkyl, Alkoxy, Halogen

$X_2$ H, Halogen

Y H,

Z –NH–, 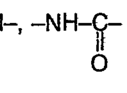

vorzugsweise

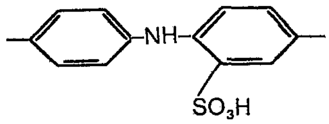

2. Farbstoffe der Formel

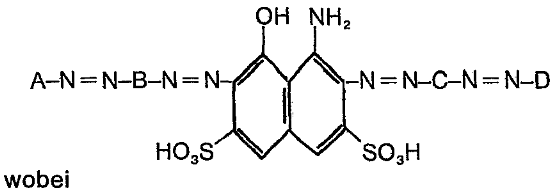

wobei

A, B, C, D gegebenenfalls substituiertes Phenyl(en) oder Naphthyl(en)

A und D stellen vorzugsweise Reste von Kupplungskomponenten der Aminobenzolreihe oder der Hydroxybenzolreihe dar, z.B. 1,3-Diaminophenyl.

B und C stehen vorzugsweise für gegebenenfalls substituiertes Phenylen. Als Substituenten kommen dabei beispielsweise Sulfo, $C_1$–$C_4$-Alkyl oder $C_1$–$C_4$-Alkoxy in Betracht.

Bei den basischen Farbstoffen handelt es sich um die gebräuchlichen Salze und Metallhalogenid-, beispielsweise Zinkchlorid-doppelsalze der bekannten kationischen Farbstoffe, insbesondere der Methin- bzw. Azamethinfarbstoffe, die den Indolinium-, Pyrazolium-, Imidazolium-, Triazolium, Tetrazolium-, Oxidazolium-, Thiodiazolium-, Oxazolium-, Thiazolium-, Pyridinium-, Pyrimidinium-, Pyrazinium-Ring enthalten.

Die genannten Heterocyclen können gegebenenfalls substituiert und/oder mit aromatischen Ringen kondensiert sein. Ferner kommen auch kationische Farbstoffe der Diphenylmethan-, Triphenylmethan-, Oxazin-, Thiazin- und 1,2-Pyran-Reihe in Frage sowie schliesslich auch Farbsalze der Arylazo- und Athrachinonreihe mit externer Oniumgruppe.

Die Herstellung der Präparationen erfolgt im allgemeinen durch Zugabe des Farbstoffs – in Form der freien Säure und/oder des Salzes bei anionischen Farbstoffen – zum Lösungsmittel. Die Salzbildung kann auch im Lösungsmittel erfolgen. Der pH-Wert der Lösungen liegt im allgemeinen oberhalb von 7, vorzugsweise bei 8–12. Im allgemeinen liegen Lösungen vor, die stabil sind und sich ausgezeichnet zum Färben der entsprechenden Substrate eignen. Die Lösungen können übliche Zusatzstoffe enthalten, insbesondere auch überschüssige organische Basen.

Beispiel 1

Zu

36,3 Teilen Isopropylglykol setzt man

3,2 Teile Lithiumhydroxid-Monohydrat zu. Die Temperatur wird auf 65° gebracht. Hierzu gibt man ein Gemisch von

40,2 Teilen Wasser und

16,4 Teilen Farbstoff der Formel

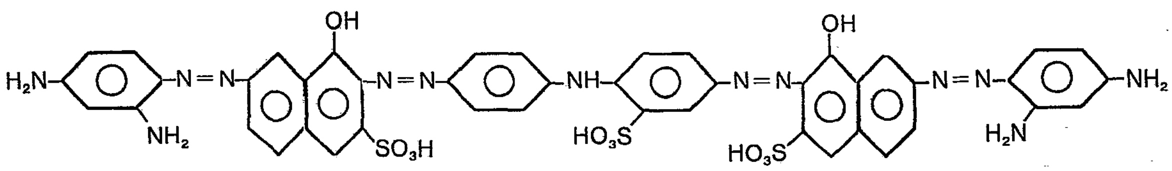

unter Beibehaltung von 65 °C und rührt, bis Lösung eingetreten ist. Nach Abkühlen auf 20 °C erhält man eine stabile Lösung, die Cellulose in schwarzen Tönen färbt.

Beispiel 2

Zu

50 Teilen Isopropylglykol und

40 Teilen Lithiumhydroxid-Monohydrat wird bei 65 °C ein Gemisch aus

50 Teilen Wasser und

40 Teilen Farbstoff der Formel

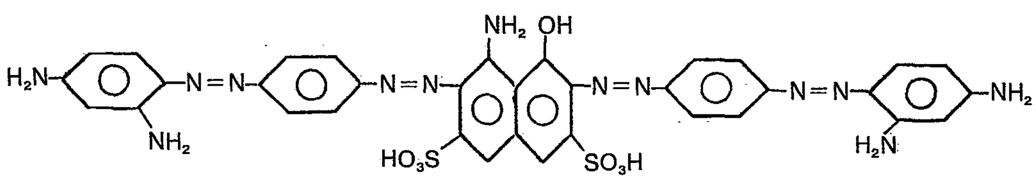

gegeben. Man rührt bei 65 °C bis zur Lösung und kühlt danach auf 20 °C ab. Man erhält eine stabile Lösung, die Cellulose in schwarzen Tönen färbt.

Beispiel 3

Zu einem Gemisch aus

65 Teilen Isopropylglykol und

55 Teilen Diglykol gibt man bei 65 °C ein Gemisch aus

60 Teilen Wasser und

20 Teilen Farbstoff der Formel

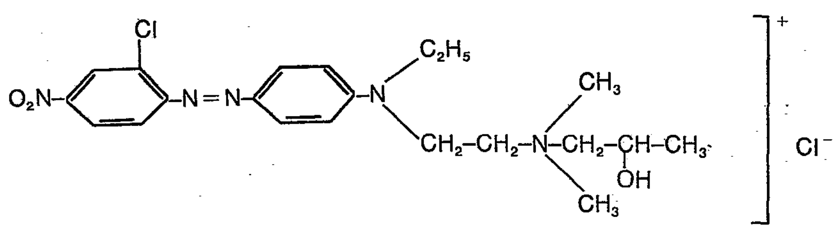

und rührt bei 65 °C bis Lösung eingetreten ist. Nach Abkühlen auf 20 °C erhält man eine stabile Lösung, die Polyacrylnitrilfasern in roten Tönen färbt.

Beispiel 4

Zu einem Gemisch aus
130 Teilen Isopropylglykol und
50 Teilen Wasser gibt man bei 60 °C
20 Teile Farbstoff der Formel

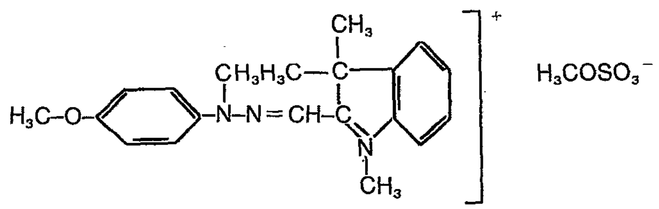

Man rührt bis Lösung eingetreten ist bei 60 °C und kühlt dann auf 20 °C ab. Die erhaltene Lösung ist stabil. Sie färbt Polyacrylnitrilfasern in rotstichig gelben Tönen.

Beispiel 5

Zu einem Gemisch aus
65 Teilen Isopropylglykol
55 Teilen Diglykol und
60 Teilen Wasser gibt man bei 65 °C
20 Teile Farbstoff der Formel

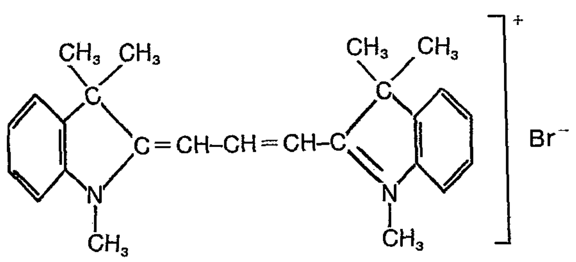

zu. Man rührt bei 65 °C bis Lösung eingetreten ist und kühlt auf 20 °C ab. Die erhaltene Lösung ist stabil. Sie färbt Polyacrylnitrilfasern in roten Tönen.

Beispiel 6

Zu einem Gemisch aus
40 Teilen Isopropylglykol und
40 Teilen Wasser werden bei 60 °C
15 Teile Farbstoff der Formel

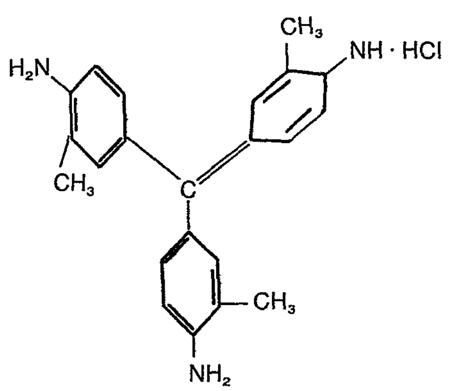

zugesetzt. Man rührt bei 60 °C bis vollständige Lösung eingetreten ist und kühlt auf 20 °C ab. Man erhält eine stabile Farbstofflösung, die Zellulose und Polyacrylnitril in roten Tönen anfärbt.

Beispiel 7

Zu einem Gemisch aus
45 Teilen Isopropylglykol,
10 Teilen Triethanolamin und
20 Teilen Wasser setzt man bei 60 °C
18 Teile Farbstoff der Formel

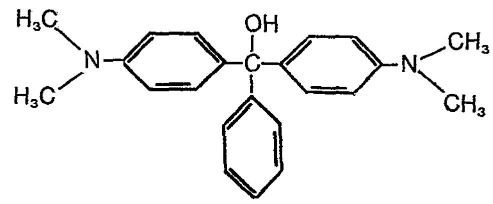

zu. Man erhält eine stabile Farbstofflösung, die Cellulose in grünen Tönen anfärbt.

Beispiel 8

Zu einem Gemisch aus
45 Teilen Isopropylglykol
10 Teilen Triethanolamin und
30 Teilen Wasser gibt man bei 65 °C
10 Teile Farbstoff der Formel

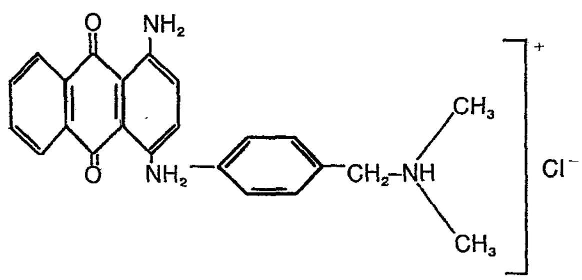

Man erhält eine stabile Farbstofflösung, die Polyacrylnitril in blauen Tönen anfärbt.

**Patentansprüche**

1. Konzentrierte Farbstoff-Präparationen, welche
5–80 Gew.-% eines metallfreien Sulfogruppenhaltigen Azofarbstoffs oder eines basischen Farbstoffs, vorzugsweise 10–50 Gew.-%
95–20 Gew.-%, vorzugsweise 90–50 Gew.-%, eines Lösungsmittels der Formel

$$H{-}O{-}CH_2CH_2{-}OR$$

mit
R Propyl oder Isopropyl
und gegebenenfalls

0–75 Gew.-% Wasser und/oder mit Wasser und/oder den Lösungsmitteln der Formel I mischbare Lösungsmittel bzw. Lösungsvermittler, vorzugsweise 0–30 Gew.-%,
enthalten.

2. Farbstoffpräparationen gemäss Anspruch 1, welche einen Sulfogruppen-haltigen Tetrakisazofarbstoff der Formel

$$A{-}N{=}N{-}B{-}N{=}N{-}T{-}N{=}N{-}C{-}N{=}N{-}D$$

enthalten, worin
A, B, C, D = gegebenenfalls substituiertes Phenyl(en) und
T = Rest einer Tetrazokomponente.

3. Farbstoffpräparation gemäss Anspruch 2, welche einen Farbstoff der Formel

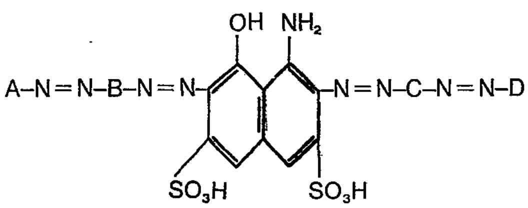

enthält.

4. Farbstoffpräparation gemäss Anspruch 3, worin
B und C = gegebenenfalls substituiertes Phenylen
A und D = Rest einer Kupplungskomponente der Aminobenzol- oder Hydroxybenzolreihe.

**Claims**

1. Concentrated dyestuff preparations which contain
5–80% by weight of a metal-free azo dyestuff containing sulpho groups or of a basic dyestuff, preferably
10–50% by weight,
95–20% by weight, preferably 90–50% by weight of a solvent of the formula

$$H{-}O{-}CH_2CH_2{-}OR$$

in which
R = propyl or isopropyl
and, if appropriate,
0–75% by weight of water and/or solvents or solubilizers which are miscible with water and/or the solvents of formula I, preferably 0–30% by weight.

2. Dyestuff preparations according to Claim 1 which contain a tetrakisazo dyestuff containing sulpho groups, of the formula

$$A{-}N{=}N{-}B{-}N{=}N{-}T{-}N{=}N{-}C{-}N{=}N{-}D$$

wherein
A, B, C and D = optionally substituted phenyl(ene) and
T = the radical of a tetraazo component.

3. Dyestuff preparation according to Claim 2 which contains a dyestuff of the formula

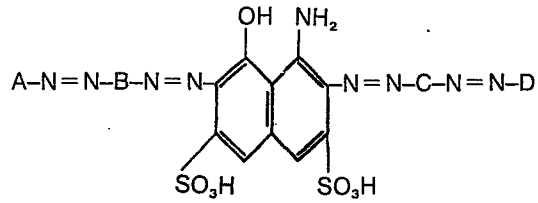

4. Dyestuff preparation according to Claim 3, wherein
B and C = optionally substituted phenylene and
A and D = the radical of a coupling component of the aminobenzene or hydroxybenzene series.

**Revendications**

1. Préparations tinctoriales concentrées, qui contiennent
5 à 80% en poids d'un colorant azoïque porteur de groupes sulfo, dépourvu de métal, ou d'un colorant basique, de préférence 10 à 50% en poids
95 à 20% en poids, de préférence 90 à 50% en poids, d'un solvant de formule

$$H{-}O{-}CH_2CH_2{-}OR$$

dans laquelle
R est un groupe propyle ou isopropyle
et, le cas échéant,
0 à 75% en poids d'eau et/ou de solvants ou de solvants auxiliaires miscibles à l'eau et/ou aux solvants de formule I, de préférence 0 à 30% en poids.

2. Préparations tinctoriales suivant la revendication 1, qui contiennent un colorant tétrakisazoïque porteur de groupes sulfo, de formule

$$A{-}N{=}N{-}B{-}N{=}N{-}T{-}N{=}N{-}C{-}N{=}N{-}D$$

dans laquelle
A, B, C, D = groupe phényle(ène) éventuellement substitué et
T = reste d'un composant tétrazoïque.

3. Préparation tinctoriale suivant la revendication 2, qui contient un colorant de formule

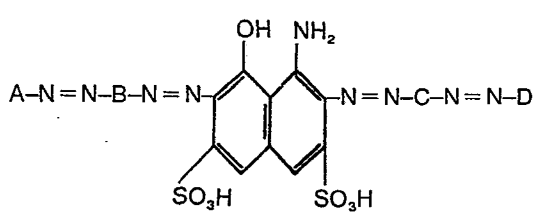

4. Préparation tinctoriale suivant la revendication 3, dans laquelle
B et C = groupe phénylène éventuellement substitué
A et D = reste d'un copulant de la série aminobenzénique ou hydroxybenzénique.